# EUROPEAN PATENT APPLICATION

(11) **EP 4 819 611 A1**
(43) Date of publication of application: **07.10.2026**
(21) Application number: 24900547.1
(22) Date of filing: 28.11.2024
(51) Int. Cl.: H04N 19/70

(54) **DECODING DEVICE, ENCODING DEVICE, DECODING METHOD, AND ENCODING METHOD**

(30) Priority: 08.12.2023 US 202363607863 P
(71) Applicant: Panasonic Intellectual Property Corporation of America, Torrance, CA 90504 (US)
(72) Inventor: GAO, Jingying, Singapore 469332 (SG); TEO, Han Boon, Singapore 469332 (SG); LIM, Chong Soon, Singapore 469332 (SG); LIM, Shen Yi, Singapore 469332 (SG); YADAV, Praveen Kumar, Singapore 469332 (SG); ABE, Kiyofumi, Kadoma-shi, Osaka 571-0057 (JP); NISHI, Takahiro, Kadoma-shi, Osaka 571-0057 (JP); SUGIO, Toshiyasu, Kadoma-shi, Osaka 571-0057 (JP)
(74) Representative: Grünecker Patent- und Rechtsanwälte PartG mbB
(86) International application number: PCT/JP2024/042248
(87) International publication number: WO 2025/121253

(57) **Abstract**

A decoder includes: circuitry; and a memory connected to the circuitry, in which the circuitry acquires, from a bitstream, an image, and a first parameter and a second parameter associated with the image, the first parameter includes modality information indicating an image type of the image, and the second parameter includes wavelength information indicating a wavelength band of light emission of the image.

## Description

### Field of the Invention

The present disclosure relates to a decoder, an encoder, a decoding method, and an encoding method.

### Background Art

Patent Literature 1 discloses an image processing system according to the background art. The image processing system includes an encoder (encoding device) and a decoder (decoding device). The encoder receives an input image having various modalities. The encoder extracts a feature from the input image and transmits the feature thus extracted to the decoder. The decoder executes an image analysis task in accordance with the feature thus received to output a segmentation map.

However, the background art includes no consideration for transmission of modality information and wavelength information on the image from the encoder to the decoder.

### Citation List

### Patent Literature

Patent Literature 1: US 2024/0046453 A

### Summary of the Invention

An object of the present disclosure is to obtain a decoder, an encoder, a decoding method, and an encoding method that enable transmission of modality information and wavelength information on an image from the encoder to the decoder to improve execution accuracy of task processing by the decoder.

A decoder according to one aspect of the present disclosure includes: circuitry; and a memory connected to the circuitry, in which the circuitry acquires, from a bitstream, an image, and a first parameter and a second parameter associated with the image, the first parameter includes modality information indicating an image type of the image, and the second parameter includes wavelength information indicating a wavelength band of light emission of the image.

### Brief Description of the Drawings

Fig. 1 is a diagram showing a simplified configuration of an image processing system according to an embodiment of the present disclosure.
Fig. 2 is a simplified diagram showing a configuration of circuitry included in an encoder.
Fig. 3 is a flowchart showing processing executed by the circuitry included in the encoder.
Fig. 4 is a simplified diagram showing a configuration of a bitstream.
Fig. 5 is a simplified diagram showing one example of syntax of a VUI parameter.
Fig. 6 is a diagram showing one example of correspondence between a value of vui_modality_type and an image type.
Fig. 7 is a simplified diagram showing one example of the syntax of the VUI parameter.
Fig. 8 is a simplified diagram showing one example of the syntax of the VUI parameter.
Fig. 9 is a simplified diagram showing one example of the syntax of the VUI parameter.
Fig. 10 is a diagram showing one example of correspondence between an index value and wavelength information.
Fig. 11 is a simplified diagram showing one example of the syntax of the VUI parameter.
Fig. 12 is a simplified diagram showing one example of the syntax of the VUI parameter.
Fig. 13 is a diagram showing one example of correspondence between values of representation type information and interpretation of each value.
Fig. 14 is a simplified diagram showing one example of the syntax of the VUI parameter.
Fig. 15 is a diagram showing one example of correspondence between values of interpolation information and interpretation of each value.
Fig. 16 is a diagram showing a configuration example of the bitstream.
Fig. 17 is a simplified diagram showing a configuration of circuitry included in a decoder.
Fig. 18 is a flowchart showing processing executed by the circuitry included in the decoder.
Fig. 19 is a simplified diagram showing one example of table information.
Fig. 20 is a simplified diagram showing one example of the table information.
Fig. 21 is a block diagram showing one example of a functional configuration of an encoding unit.
Fig. 22 is a diagram showing one example of data hierarchical structure in a stream.
Fig. 23 is a block diagram showing one example of a functional configuration of a decoding unit.

### Description of Embodiments

### (Knowledge underlying present disclosure)

The image processing system according to the background art includes an encoder and a decoder. The encoder receives an input image having various modalities. The encoder extracts a feature from the input image and transmits the feature thus extracted to the decoder. The decoder executes an image analysis task in accordance with the feature thus received to output a segmentation map.

The decoder executes task processing including a human vision and a machine task. The human vision means visual recognition or viewing of a moving image by a human being such as an operator or a user. The machine task includes various types of task processing with use of an AI model, such as object detection, object tracking, object segmentation, action recognition, or pose estimation.

According to the background art, modality information and wavelength information are not transmitted from the encoder to the decoder. This may lead to failure in selection of the most appropriate task processing according to an image type of the input image, thereby deteriorating execution accuracy of task processing.

In order to solve such a problem, the inventor has devised the present disclosure through finding that this problem can be solved by including modality information indicating the image type of the image and wavelength information indicating the wavelength band of light emission of the image in a bitstream for transmission from the encoder to the decoder, and executing task processing by the decoder based on the modality information and the wavelength information.

Next, each aspect of the present disclosure will be described.

A decoder according to a first aspect of the present disclosure includes: circuitry; and a memory connected to the circuitry, in which the circuitry acquires, from a bitstream, an image, and a first parameter and a second parameter associated with the image, the first parameter includes modality information indicating an image type of the image, and the second parameter includes wavelength information indicating a wavelength band of light emission of the image.

According to the first aspect, the encoder can include the modality information indicating the image type of the image and the wavelength information indicating the wavelength band of light emission of the image in the bitstream for transmission to the decoder, thereby making it possible to improve execution accuracy of task processing by the decoder.

In the decoder according to a second aspect of the present disclosure, preferably, in the first aspect, the second parameter includes flag information indicating whether the wavelength information is described in the bitstream, and when the flag information indicates that the wavelength information is described in the bitstream, the circuitry acquires information indicating a minimum value and a maximum value of the wavelength band from the bitstream.

According to the second aspect, the circuitry can appropriately identify the wavelength band of the image based on the acquired minimum and maximum values.

In the decoder according to a third aspect of the present disclosure, in the second aspect, when the flag information indicates that the wavelength information is not described in the bitstream, the minimum value and the maximum value are preferably not defined.

According to the third aspect, the circuitry can easily determine, through the flag information, that the minimum and maximum values of the wavelength band are not defined in the bitstream.

In the decoder according to a fourth aspect of the present disclosure, preferably, in the first aspect, the second parameter includes an index value, and a minimum value and a maximum value of the wavelength band corresponding to the index value are defined.

According to the fourth aspect, the circuitry can appropriately identify the wavelength band of the image based on the acquired index value. It is possible to reduce the amount of data transmitted from the encoder to the decoder more than when describing the minimum and maximum values of the wavelength band in the bitstream.

In the decoder according to a fifth aspect of the present disclosure, preferably, in the fourth aspect, when the index value is a specific value, the minimum value and the maximum value are not defined.

According to the fifth aspect, it is possible to handle the case where the image characteristics are unknown and the wavelength band of the image cannot be identified in the encoder, or the case where the decoder does not acquire the wavelength information from the bitstream.

In the decoder according to a sixth aspect of the present disclosure, preferably, in the fourth aspect, when the index value is a specific value, the minimum value and the maximum value are described in the bitstream, and the circuitry acquires information indicating the minimum value and the maximum value from the bitstream.

According to the sixth aspect, it is possible to handle the case where the minimum and maximum values of the wavelength band are set by a user in the encoder.

In the decoder according to a seventh aspect of the present disclosure, preferably, in the second or sixth aspect, the information indicating the minimum value includes information indicating mantissa of the minimum value and information indicating an exponent in exponential representation using a determined base, and the information indicating the maximum value includes information indicating mantissa of the maximum value and information indicating an exponent in exponential representation using a determined base.

According to the seventh aspect, it is possible to appropriately describe the minimum and maximum values of the wavelength band in the bitstream by using exponential representation.

In the decoder according to an eighth aspect of the present disclosure, preferably, in the seventh aspect, the information indicating the mantissa of the minimum value has three or more significant decimal digits, and the information indicating the mantissa of the maximum value has three or more significant decimal digits.

According to the eighth aspect, it is possible to describe the minimum and maximum values of the wavelength band with sufficient significant digits in the bitstream.

In the decoder according to a ninth aspect of the present disclosure, preferably, in the seventh aspect, when the information indicating the mantissa of the minimum value indicates "0", the minimum value is not defined, and when the information indicating the mantissa of the maximum value indicates "0", the maximum value is not defined.

According to the ninth aspect, it is possible to handle the case where the image characteristics are unknown and the minimum value or the maximum value cannot be identified in the encoder, or the case where the decoder does not acquire the minimum value or the maximum value of the wavelength band from the bitstream.

In the decoder according to a tenth aspect of the present disclosure, preferably, in the second or fourth aspect, the minimum value is set to be equal to or greater than a shortest wavelength corresponding to the image type indicated by the modality information, and the maximum value is set to be equal to or less than a longest wavelength corresponding to the image type indicated by the modality information.

According to the tenth aspect, it is possible to avoid discrepancies between the wavelength band corresponding to the image type and the wavelength band described in the bitstream.

In the decoder according to an eleventh aspect of the present disclosure, preferably, in any one of the first to tenth aspects, the circuitry acquires the first parameter and the second parameter from a determined header region of the bitstream in the acquisition of the first parameter and the second parameter, and the determined header region includes VUI or SEI.

According to the eleventh aspect, the decoder can easily acquire the first parameter and the second parameter from the determined header region of the bitstream.

In the decoder according to a twelfth aspect of the present disclosure, preferably, in any one of the first to eleventh aspects, the bitstream has a multi-layer configuration including a plurality of image layers, and the circuitry acquires a plurality of the images different in terms of the wavelength band from the plurality of image layers in the image acquisition.

According to the twelfth aspect, the encoder can transmit, to the decoder, the plurality of images different in terms of the wavelength band, and the decoder can appropriately acquire the plurality of images from the bitstream.

In the decoder according to a thirteenth aspect of the present disclosure, preferably, in the twelfth aspect, the bitstream with the multi-layer configuration is a bitstream in which an output signal from a multispectral camera is encoded.

According to the thirteenth aspect, the encoder can transmit, to the decoder, the plurality of images of the plurality of wavelength bands included in the output signal from the multispectral camera, and the decoder can appropriately acquire the plurality of images from the bitstream.

An encoder according to a fourteenth aspect of the present disclosure includes: circuitry; and a memory connected to the circuitry, in which the circuitry encodes an image, and a first parameter and a second parameter associated with the image into a bitstream, the first parameter includes modality information indicating an image type of the image, and the second parameter includes wavelength information indicating a wavelength band of light emission of the image.

According to the fourteenth aspect, the encoder can include the modality information indicating the image type of the image and the wavelength information indicating the wavelength band of light emission of the image in the bitstream for transmission to the decoder, thereby making it possible to improve execution accuracy of task processing by the decoder.

In the encoder according to a fifteenth aspect of the present disclosure, preferably, in the fourteenth aspect, the second parameter includes flag information indicating whether the wavelength information is described in the bitstream, and the circuitry encodes information indicating a minimum value and a maximum value of the wavelength band into the bitstream, and in such a case, sets the flag information indicating that the wavelength information is described in the bitstream.

According to the fifteenth aspect, the decoder can appropriately identify the wavelength band of the image by using the minimum and maximum values by acquiring the wavelength information from the bitstream.

In the encoder according to a sixteenth aspect of the present disclosure, preferably, in the fifteenth aspect, the circuitry does not define the minimum value and the maximum value, and in such a case, sets the flag information indicating that the wavelength information is not described in the bitstream.

According to the sixteenth aspect, the decoder can easily determine, through the flag information, that the minimum and maximum values of the wavelength band are not defined in the bitstream.

In the encoder according to a seventeenth aspect of the present disclosure, preferably, in the fourteenth aspect, the second parameter includes an index value, and a minimum value and a maximum value of the wavelength band corresponding to the index value are defined.

According to the seventeenth aspect, the decoder can appropriately identify the wavelength band of the image by using the index value by acquiring the wavelength information from the bitstream. It is possible to reduce the amount of data transmitted from the encoder to the decoder more than when describing the minimum and maximum values of the wavelength band in the bitstream.

In the encoder according to an eighteenth aspect of the present disclosure, preferably, in the seventeenth aspect, the circuitry does not define the minimum value and the maximum value, and in such a case, sets the index value to a specific value.

According to the eighteenth aspect, it is possible to handle the case where the image characteristics are unknown and the wavelength band of the image cannot be identified in the encoder, or the case where the decoder does not acquire the wavelength information from the bitstream.

In the encoder according to a nineteenth aspect of the present disclosure, preferably, in the seventeenth aspect, the circuitry encodes information indicating the minimum value and the maximum value into the bitstream, and in such a case, sets the index value to a specific value.

According to the nineteenth aspect, it is possible to handle the case where the minimum and maximum values of the wavelength band are set by a user in the encoder.

In the encoder according to a twentieth aspect of the present disclosure, preferably, in the fifteenth or nineteenth aspect, the information indicating the minimum value includes information indicating mantissa of the minimum value and information indicating an exponent in exponential representation using a determined base, and the information indicating the maximum value includes information indicating mantissa of the maximum value and information indicating an exponent in exponential representation using a determined base.

According to the twentieth aspect, it is possible to appropriately describe the minimum and maximum values of the wavelength band in the bitstream by using exponential representation.

In the encoder according to a twenty-first aspect of the present disclosure, preferably, in the twentieth aspect, the information indicating the mantissa of the minimum value has three or more significant decimal digits, and the information indicating the mantissa of the maximum value has three or more significant decimal digits.

According to the twenty-first aspect, it is possible to describe the minimum and maximum values of the wavelength band with sufficient significant digits in the bitstream.

In the encoder according to a twenty-second aspect of the present disclosure, preferably, in the twentieth aspect, the circuitry does not define the minimum value, in such a case, sets the information indicating the mantissa of the minimum value to "0", and the circuitry does not define the maximum value, in such a case, sets the information indicating the mantissa of the maximum value to "0".

According to the twenty-second aspect, it is possible to handle the case where the image characteristics are unknown and the minimum value or the maximum value of the wavelength band cannot be identified in the encoder, or the case where the decoder does not acquire the minimum value or the maximum value of the wavelength band from the bitstream.

In the encoder according to a twenty-third aspect of the present disclosure, preferably, in the fifteenth or seventeenth aspect, the circuitry sets the minimum value to be equal to or greater than a shortest wavelength corresponding to the image type indicated by the modality information, and sets the maximum value to be equal to or less than a longest wavelength corresponding to the image type indicated by the modality information.

According to the twenty-third aspect, it is possible to avoid discrepancies between the wavelength band corresponding to the image type and the wavelength band described in the bitstream.

In the encoder according to a twenty-fourth aspect of the present disclosure, preferably, in any one of the fourteenth to twenty-third aspects, the circuitry encodes the first parameter and the second parameter into a determined header region of the bitstream in the encoding of the first parameter and the second parameter, and the determined header region includes VUI or SEI.

According to the twenty-fourth aspect, the decoder can easily acquire the first parameter and the second parameter from the determined header region of the bitstream.

In the encoder according to a twenty-fifth aspect of the present disclosure, preferably, in any one of the fourteenth to twenty-fourth aspects, the bitstream has a multi-layer configuration including a plurality of image layers, and the circuitry encodes a plurality of the images different in terms of the wavelength band into the plurality of image layers in the image encoding.

According to the twenty-fifth aspect, the encoder can transmit, to the decoder, the plurality of images different in terms of the wavelength band, and the decoder can appropriately acquire the plurality of images from the bitstream.

In the encoder according to a twenty-sixth aspect of the present disclosure, preferably, in the twenty-fifth aspect, the circuitry generates the bitstream with the multi-layer configuration by encoding an output signal from a multispectral camera.

According to the twenty-sixth aspect, the encoder can transmit, to the decoder, the plurality of images of the plurality of wavelength bands included in the output signal from the multispectral camera, and the decoder can appropriately acquire the plurality of images from the bitstream.

A decoding method according to a twenty-seventh aspect of the present disclosure includes, by a decoder: acquiring an image, and a first parameter and a second parameter associated with the image from a bitstream, in which the first parameter includes modality information indicating an image type of the image, and the second parameter includes wavelength information indicating a wavelength band of light emission of the image.

According to the twenty-seventh aspect, the encoder can include the modality information indicating the image type of the image and the wavelength information indicating the wavelength band of light emission of the image in the bitstream for transmission to the decoder, thereby making it possible to improve execution accuracy of task processing by the decoder.

An encoding method according to a twenty-eighth aspect of the present disclosure includes, by an encoder: encoding an image, and a first parameter and a second parameter associated with the image into a bitstream, in which the first parameter includes modality information indicating an image type of the image, and the second parameter includes wavelength information indicating a wavelength band of light emission of the image.

According to the twenty-eighth aspect, the encoder can include the modality information indicating the image type of the image and the wavelength information indicating the wavelength band of light emission of the image in the bitstream for transmission to the decoder, thereby making it possible to improve execution accuracy of task processing by the decoder.

### (Embodiments of present disclosure)

Embodiments of the present disclosure will be described in detail below with reference to the drawings. Note that elements denoted with the same reference sign in different drawings represent the same or corresponding element.

Note that each embodiment described below shows one specific example of the present disclosure. Numerical values, shapes, components, steps, order of steps, and the like described in the following embodiments are one example and are not intended to limit the present disclosure. A constituent element not described in an independent claim representing the highest concept among constituent elements in the embodiments below is described as an arbitrary constituent element. In all the embodiments, respective contents can be combined. Each of these general or specific aspects may be achieved by means of a system, a method, an integrated circuit, a computer program, or a computer-readable recording medium such as a CD-ROM, or may be achieved by an arbitrary combination of the system, the method, the integrated circuit, the computer program, and the recording medium.

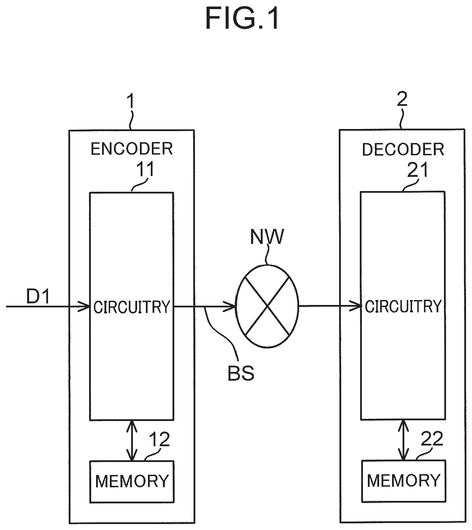

Fig. 1 is a diagram showing a simplified configuration of an image processing system according to the embodiment of the present disclosure. The image processing system includes an encoder 1, a decoder 2, and a transmission line NW.

The encoder 1 receives image data D1 from an external device. Examples of the external device include a camera configured to capture a moving image. The external device inputs, to the encoder 1, the image data D1 of the moving image thus captured.

The encoder 1 generates a bitstream BS in accordance with the image data D1. Here, a bitstream is a data string of digital data or a flow of the digital data. The bitstream (or simply the stream) may be constituted by a single stream or a plurality of streams divided into a plurality of hierarchical layers. The bitstream may be transmitted by serial communication through a single transmission line or by packet communication through a plurality of transmission lines. The encoder 1 transmits the bitstream BS thus generated to the decoder 2 via the transmission line NW. The decoder 2 receives the bitstream BS.

The decoder 2 decodes the image data D1 from the bitstream BS, and executes task processing in accordance with the image data D1 thus decoded. The task processing includes a human vision and a machine task. The human vision means visual recognition or viewing of a moving image by a human being such as an operator or a user. The machine task includes various types of task processing such as object detection, object tracking, object segmentation, action recognition, and pose estimation with use of artificial intelligence (AI) models as machine-learned estimation models. A task processor configured to execute the human vision includes a display device such as a liquid crystal display or an organic EL display. A task processor configured to execute the machine task includes an inference device using AI.

The transmission line NW is constituted by the Internet, a wide area network (WAN), a local area network (LAN), or an arbitrary combination of any of these. The transmission line NW is desirably a private network or the like for secured communication with limited access.

The encoder 1 includes circuitry 11 and a memory 12 connected to the circuitry 11. The circuitry 11 includes a processor such as a CPU. The memory 12 includes an arbitrary recording medium such as a ROM, a RAM, an HDD, an SSD, or a semiconductor memory. The memory 12 stores data to be processed or data being processed by the circuitry 11, and the like.

The decoder 2 includes circuitry 21 and a memory 22 connected to the circuitry 21. The circuitry 21 includes a processor such as a CPU. The memory 22 includes an arbitrary recording medium such as a ROM, a RAM, an HDD, an SSD, or a semiconductor memory. The memory 22 stores data to be processed or data being processed by the circuitry 21, and the like.

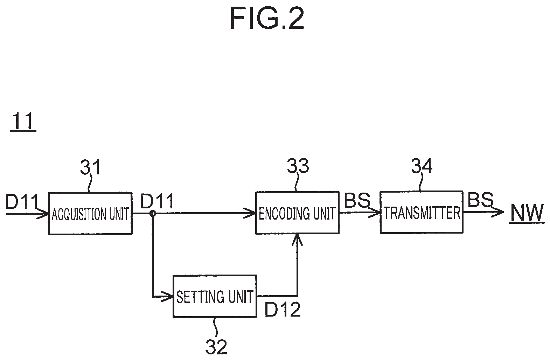

Fig. 2 is a simplified diagram showing a configuration of the circuitry 11 included in the encoder 1. The circuitry 11 includes an acquisition unit 31, a setting unit 32, an encoding unit 33, and a transmitter 34.

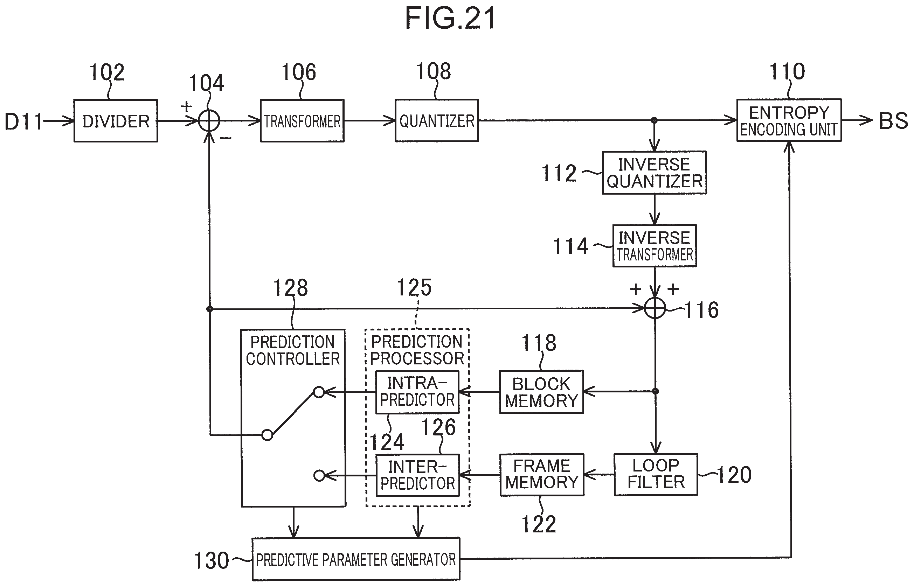

Description is made next to the encoding unit 33 according to the present embodiment. Fig. 21 is a block diagram showing one example of a functional configuration of the encoding unit 33 according to the present embodiment. The encoding unit 33 encodes an image in block units.

As shown in Fig. 21, the encoding unit 33 includes a divider 102, a subtractor 104, a transformer 106, a quantizer 108, an entropy encoding unit 110, an inverse quantizer 112, an inverse transformer 114, an adder 116, a block memory 118, a loop filter 120, a frame memory 122, an intra-predictor 124, an inter-predictor 126, a prediction controller 128, and a predictive parameter generator 130. Note that the intra-predictor 124 and the inter-predictor 126 constitute part of a prediction processor 125.

For example, the encoding unit 33 shown in Fig. 21 includes a plurality of constituent elements implemented by the circuitry 11 and the memory 12 shown in Fig. 1.

The circuitry 11 includes a processor such as a CPU. The circuitry 11 may be constituted by an electronic circuit dedicated or generalized to image encoding, or by an assembly of a plurality of electronic circuits. For example, the circuitry 11 may function as a plurality of constituent elements except for a constituent element for information storage, out of the plurality of constituent elements included in the encoding unit 33 shown in Fig. 21.

The memory 12 may be constituted by an electronic circuit dedicated or generalized to information storage, or by an assembly of a plurality of electronic circuits. The memory 12 may be externally connected to the circuitry 11 or may be incorporated in the circuitry 11. The memory 12 may be a magnetic disk, an optical disk, or the like, or may be expressed as a storage, a recording medium, or the like. The memory 12 may be a nonvolatile memory or a volatile memory.

The memory 12 may store an image to be encoded, or a stream corresponding to an encoded image. The memory 12 may store a program for image encoding by the processor.

The memory 12 may function as the constituent element for information storage, out of the plurality of constituent elements included in the encoding unit 33 shown in Fig. 21. Specifically, the memory 12 may function as the block memory 118 and the frame memory 122 shown in Fig. 21. More specifically, the memory 12 may store a restructured image (specifically, a restructured block, a restructured picture, or the like).

Note that in the encoding unit 33, part of the plurality of constituent elements shown in Fig. 21 is not necessarily mounted, and part of a plurality of processing executed by the plurality of constituent elements is not necessarily be executed. Alternatively, part of the plurality of constituent elements shown in Fig. 21 may be mounted on a different device, and part of the plurality of processing executed by the plurality of constituent elements may be executed by the different device.

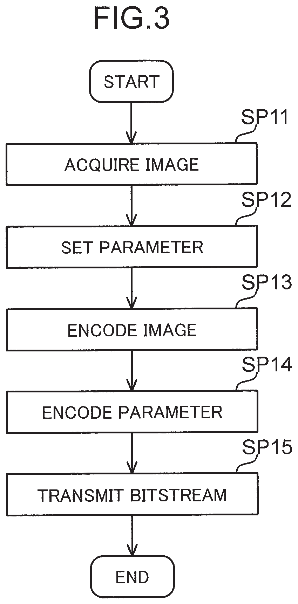

Fig. 3 is a flowchart showing the processing executed by the circuitry 11 included in the encoder 1.

Initially in step SP11, the acquisition unit 31 acquires image data D11 indicating an image Q as a processing target received from an external device. The image data D11 corresponds to the image data D1 indicated in Fig. 1.

Next, in step SP12, the setting unit 32 sets a parameter P in association with the image Q. The parameter P includes a first parameter P1, a second parameter P2, a third parameter P3, and a fourth parameter P4. The first parameter P1 includes modality information indicating the image type of the image Q. The second parameter P2 includes wavelength information indicating the wavelength band of light emission of the image Q. The third parameter P3 includes color information of the image Q. The fourth parameter P4 includes extension bit information corresponding to the spare image type when the modality information indicates that the image type is a spare image type for extension. The setting unit 32 inputs data D12 including setting information of the parameter P to the encoding unit 33.

The first parameter P1 includes modality information indicating the image type of the image Q. The image type includes at least one of a visible light image, an infrared image, and an ultraviolet image, for example. The visible light image includes a natural image, an RGB image, or the like, and is used for provision of detailed color information for the human vision or the machine task, and the like. The infrared image includes an image captured by using an infrared camera, or the like, and is used for imaging in the dark, and the like. The ultraviolet image includes an image captured by using an ultraviolet camera, or the like, and is used for detecting a product flaw, and the like. The modality information indicates that the image type is at least one of the visible light image, the infrared image, and the ultraviolet image. In addition, the modality information indicates at least one of the following: the image type is not defined; and the image type is a spare image type for extension. That is, the modality information indicates that the image type is at least one of the visible light image, the infrared image, the ultraviolet image, not defined, and the spare image type for extension. Note that the modality information may include other image types. The setting unit 32 may set the first parameter P1 through image analysis based on the image data D11, or may set the first parameter P1 based on setting information input by an operator of the encoder 1.

Next, in step SP13, the encoding unit 33 encodes, into the bitstream BS, the image Q indicated by the image data D11 received from the acquisition unit 31.

Next, in step SP14, the encoding unit 33 encodes, into the bitstream BS, the parameter P indicated by the data D12 received from the setting unit 32. Herein, encoding the parameter P into the bitstream BS may be expressed as retaining the parameter P in the bitstream BS or storing the parameter P in the bitstream BS. Processing in step SP13 and processing in step SP14 may be executed in inverse order of the example in Fig. 3, or may be executed simultaneously.

Next, in step SP15, the transmitter 34 transmits the bitstream BS received from the encoding unit 33 to the decoder 2 via the transmission line NW.

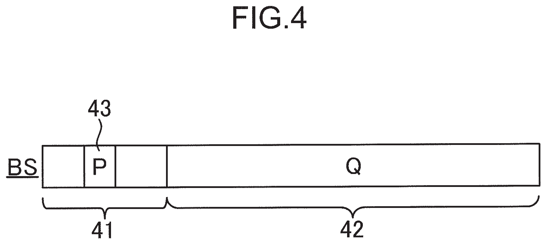

Fig. 4 is a simplified diagram showing a configuration of the bitstream BS. The bitstream BS contains a header region 41 and a payload region 42. The encoding unit 33 stores encoded data of the image Q in the payload region 42, and stores encoded data of the parameter P associated with the image Q in the header region 41.

The encoding unit 33 may encode the encoded data of the parameter P in a determined region 43 in the header region 41. The determined region 43 may correspond to video usability information (VUI) or supplemental enhancement information (SEI). In this specification, an example using the VUI parameter will be described, but when describing in SEI, the VUI parameter can be read as an SEI parameter. However, the determined region 43 may not be limited to the VUI or the SEI, but may be VPS, SPS, PPS, PH, SH, APS, a tile header, a system layer header, or the like.

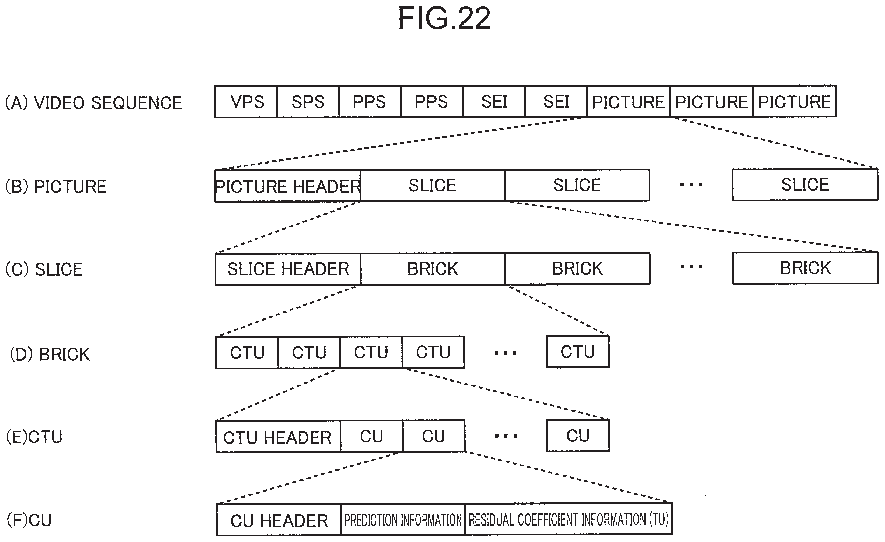

Fig. 22 is a diagram showing one example of data hierarchical structure in a stream. The stream contains a video sequence, for example. As shown in (A) in Fig. 22, the video sequence contains, for example, a video parameter set (VPS), a sequence parameter set (SPS), a picture parameter set (PPS), supplemental enhancement information (SEI), and a plurality of pictures.

The VPS contains, in a moving image constituted by a plurality of layers, an encoded parameter common to the plurality of layers, and an encoded parameter associated with the plurality of layers or an individual layer included in the moving image.

The SPS contains a parameter used for a sequence, that is, an encoded parameter to be referred to by the decoder 2 for decoding of the sequence. The encoded parameter may indicate, for example, a width or a height of a picture. Note that a plurality of SPSs may be present.

The PPS includes a parameter used for a picture, that is, an encoded parameter to be referred to by the decoder 2 for decoding of each picture in a sequence. The encoded parameter may include, for example, a reference value of a quantization width to be used for picture decoding, and a flag indicating application of weighted prediction. Note that a plurality of PPSs may be present. The SPS and the PPS may simply be called a parameter set.

As shown in (B) in Fig. 22, a picture contains a picture header and at least one slice. The picture header contains an encoded parameter to be referred to by the decoder 2 for decoding of the at least one slice.

As shown in (C) in Fig. 22, the slice contains a slice header and at least one brick. The slice header contains an encoded parameter to be referred to by the decoder 2 for decoding of the at least one brick.

As shown in (D) in Fig. 22, the brick contains at least one coding tree unit (CTU).

Note that the picture may contain no slice, and may contain a tile group instead of the slice. In this case, the tile group contains at least one tile. The brick may optionally contain a slice.

The CTU is also called a super block or a basic division unit. As shown in (E) in Fig. 22, the CTU contains a CTU header and at least one coding unit (CU). The CTU header contains an encoded parameter to be referred to by the decoder 2 for decoding of the at least one CU.

The CU may optionally be divided into a plurality of small CUs. As shown in (F) in Fig. 22, the CU contains a CU header, prediction information, and residual coefficient information. The prediction information is information for prediction of a CU. The residual coefficient information is information indicating a prediction residual. Note that the CU is basically identical to a prediction unit (PU) or a transform unit (TU), and may alternatively contain a plurality of TUs smaller than the CU. The CU may optionally be processed in virtual pipeline decoding units (VPDUs) constituting the CU. The VPDU is, for example, a fixed unit processible at one stage upon pipeline processing in hardware.

Note that the stream does not necessarily contain part of the plurality of hierarchical layers shown in Fig. 22. These hierarchical layers may be changed in terms of their order, and any of the hierarchical layers may be replaced with another hierarchical layer.

A picture as a target of processing currently executed by a device such as the encoder 1 or the decoder 2 is referred to as a current picture. The current picture means an encoding target picture when the processing corresponds to encoding, and the current picture means a decoding target picture when the processing corresponds to decoding. A block (a CU or a block of the CU) as a target of processing currently executed by a device such as the encoder 1 or the decoder 2 is referred to as a current block. The current block means an encoding target block when the processing corresponds to encoding, and the current block means a decoding target block when the processing corresponds to decoding.

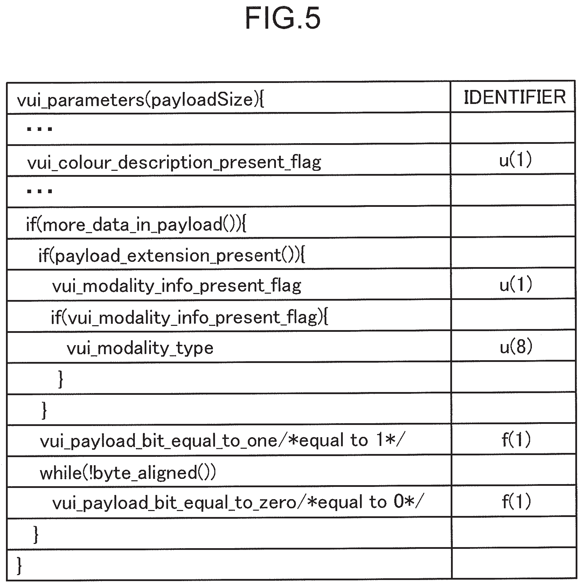

Fig. 5 is a simplified diagram showing one example of syntax of the VUI parameter including the first parameter P1 and the third parameter P3.

The first parameter P1 includes flag information (vui_modality_info_present_flag) indicating whether the modality information is described in the bitstream BS. When the value of vui_modality_info_present_flag is 1, this indicates that the modality information is present within the VUI parameter. When the value of vui_modality_info_present_flag is 0, this indicates that the modality information is not present within the VUI parameter. When vui_modality_info_present_flag indicates that the modality information is described in the bitstream BS, the modality information is represented as an identifier value of vui_modality_type contained in the VUI parameter.

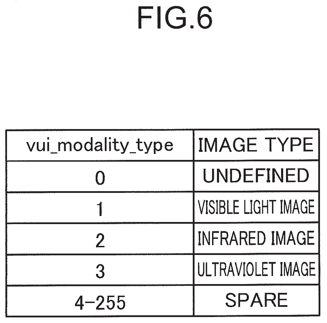

Fig. 6 is a diagram showing one example of the correspondence between the value of vui_modality_type and the image type. As shown in Fig. 6, when the value of vui_modality_type is 0, this indicates that the image type of the image Q is not defined (that is, undefined). When the value of vui_modality_type is 1, this indicates that the image type of the image Q is the visible light image. When the value of vui_modality_type is 2, this indicates that the image type of the image Q is the infrared image. When the value of vui_modality_type is 3, this indicates that the image type of the image Q is the ultraviolet image. Other values of vui_modality_type (4-255 in this example) indicate a spare region reserved for future extension use. Note that the number of image types defined in Fig. 6 may be increased depending on the image Q to be processed. When vui_modality_type is not present, this may mean that the value of vui_modality_type is 0. When the value of vui_modality_type is 0, the wavelength information indicating a wide wavelength band spanning multiple image types such as hyperspectral images may be able to be defined by user settings or the like.

As shown in Fig. 5, the third parameter P3 includes flag information (vui_colour_description_present_flag) indicating whether color information is described in the bitstream BS. When the value of vui_colour_description_present_flag is 1, this indicates that the color information is present in the VUI parameter. When the value of vui_colour_description_present_flag is 0, this indicates that no color information is present in the VUI parameter. Although illustration is omitted, the color information includes vui_colour_primaries, vui_trasfer_characteristics, and vui_matrix_coeffs, and the like. Note that when the image type is the infrared image or the ultraviolet image, the third parameter P3 does not need to include color information. In the encoding processing, when the image type indicated by the modality information is the visible light image, the encoder 1 sets the value of vui_colour_description_present_flag to 1 and describes the color information in the VUI parameter. Meanwhile, when the image type indicated by the modality information is the infrared image or the ultraviolet image, the encoder 1 sets the value of vui_colour_description_present flag to 0 and does not describe the color information in the VUI parameter. In the decoding processing, when the image type indicated by the modality information is the visible light image, the decoder 2 acquires the color information from the bitstream BS. Meanwhile, when the image type indicated by the modality information is the infrared image or the ultraviolet image, the decoder 2 may not acquire the color information from the bitstream BS, and even when the color information is acquired from the bitstream BS, the value may be ignored.

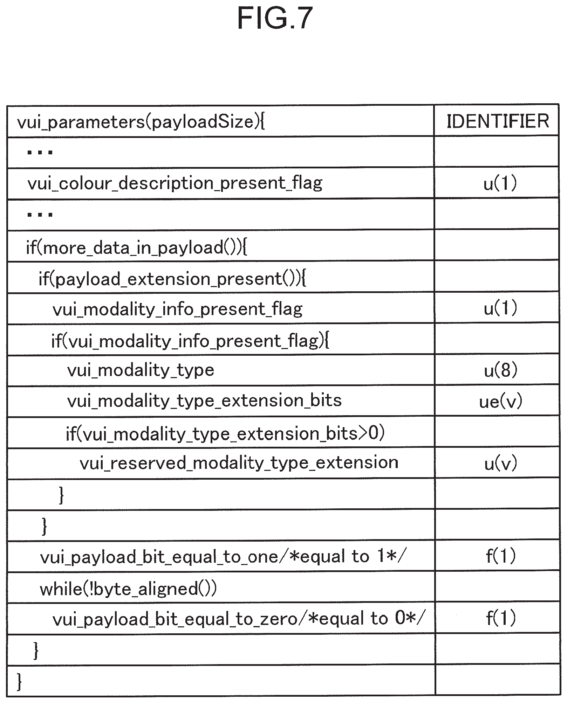

Fig. 7 is a simplified diagram showing one example of syntax of the VUI parameter including the fourth parameter P4.

The fourth parameter P4 includes extension bit information corresponding to the spare image type when the modality information indicates that the image type is a spare image type for extension. The extension bit information includes information (vui_modality_type_extension_bits) indicating the bit length of additional information required for the spare image type and additional information (vui_reserved_modality_type_extension) having the bit length. When the value of vui_modality_type_extension_bits is 0, this indicates that the bitstream BS does not describe vui_reserved_modality_type_extension. Meanwhile, when the value of vui_modality_type_extension_bits is greater than 0, this indicates that vui_reserved_modality_type_extension is described in the bitstream BS, and its bit length. The maximum value of vui_modality_type_extension_bits can be set arbitrarily, for example, to 2048.

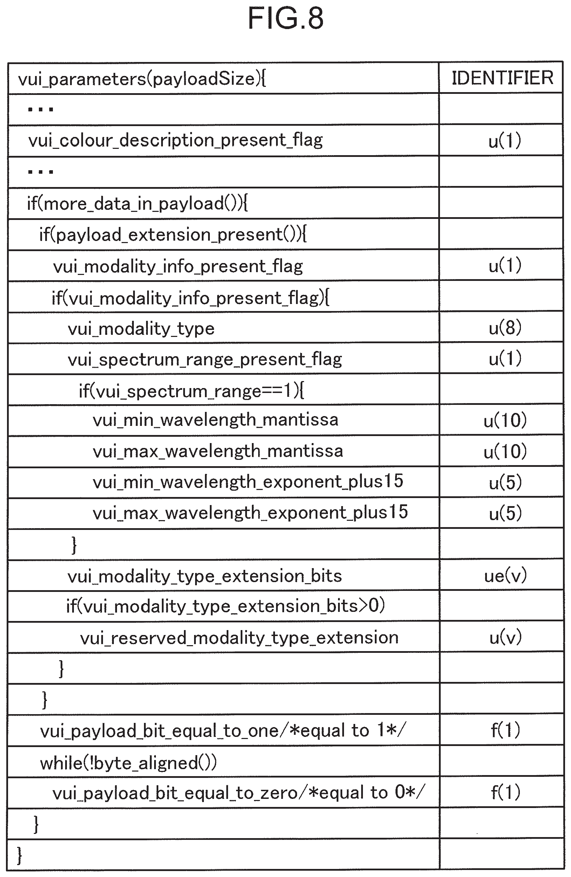

Fig. 8 is a simplified diagram showing a first example of the syntax of the VUI parameter including the second parameter P2. The second parameter P2 includes wavelength information indicating the wavelength band of light emission of the image Q.

In the example shown in Fig. 8, the second parameter P2 includes flag information (vui_spectrum_range_present_flag) indicating whether the wavelength information is described in the bitstream BS. When the value of vui_spectrum_range_present_flag is 0, this indicates that the spectral band of the light emission wavelength represented in the coded layer video sequence (CLVS) image is not present in the VUI parameter. When the value of vui_spectrum_range_present_flag is 1, this indicates that the spectral band of the light emission wavelength represented in the CLVS image is present in the VUI parameter.

When the value of vui_spectrum_range_present_flag is 1, the wavelength information includes information indicating the minimum value (minimum wavelength) and maximum value (maximum wavelength) of the wavelength band of the image Q. Both the minimum wavelength and maximum wavelength are in wavelengths in meters.

The information indicating the minimum value of the wavelength band includes information (vui_min_wavelength_mantissa) indicating the mantissa of the minimum value in the exponential representation using a determined base (for example, 10) and information (vui_min_wavelength_exponent_plus15) indicating the value obtained by adding 15 to the exponent of the minimum value. The minimum value of the wavelength band Min_Wavelength is represented as Min_Wavelength=vui_min_wavelength_mantissa×10^{vui_min_wavelength_exponent_plus15-15}. Accordingly, in the example shown in Fig. 8, this makes it possible to designate the minimum value in the range from 10⁻¹⁵ to 10⁺¹⁶ (m). Here, when vui_min_wavelength_mantissa is 0 or is not present, this means that the minimum value of the wavelength band is unknown or unspecified and the minimum value is not defined, or is defined by a method other than exponential representation. In this case, in the decoding processing, the decoder 2 does not need to acquire vui_min_wavelength_exponent_plus15 from the bitstream BS. Even if vui_min_wavelength_exponent_plus15 is acquired from the bitstream BS, the value may be ignored.

The information indicating the maximum value of the wavelength band includes information (vui_max_wavelength_mantissa) indicating the mantissa of the maximum value in the exponential representation using a determined base (for example, 10) and information (vui_max_wavelength_exponent_plus15) indicating the value obtained by adding 15 to the exponent of the maximum value. The maximum value of the wavelength band Max_Wavelength is represented as Max_Wavelength=vui_max_wavelength_mantissa×10^{vui_max_wavelength_exponent_plus15-15}. Accordingly, in the example shown in Fig. 8, this makes it possible to designate the maximum value in the range from 10⁻¹⁵ to 10⁺¹⁶ (m). Here, when vui_max_wavelength_mantissa is 0 or is not present, this means that the maximum value of the wavelength band is unknown or unspecified and the maximum value is not defined, or is defined by a method other than exponential representation. In this case, the decoder 2 does not need to acquire vui_max_wavelength_exponent_plus15 from the bitstream BS. Even if vui_max_wavelength_exponent_plus15 is acquired from the bitstream BS, the value may be ignored.

Both vui_min_wavelength_mantissa and vui_max_wavelength_mantissa have three or more significant decimal digits. In the example shown in Fig. 8, both vui_min_wavelength_mantissa and vui_max_wavelength_mantissa have a bit length of 10 bits in binary, but may have an arbitrary bit length of 11 bits or more. Similarly, in the example shown in Fig. 8, both vui_min_wavelength_exponent_plus15 and vui_max_wavelength_exponent_plus15 have a bit length of five bits in binary, but may have an arbitrary bit length of six bits or more. The value added to the exponent is not limited to "+15", and the syntax may add another fixed value.

Note that in the encoder 1, the minimum value of the wavelength band indicated by vui_min_wavelength_mantissa and vui_min_wavelength_exponent_plus15 is set to be equal to or greater than the shortest wavelength corresponding to the image type indicated by the modality information. Similarly, in the encoder 1, the maximum value of the wavelength band indicated by vui_max_wavelength_mantissa and vui_max_wavelength_exponent_plus15 is set to be equal to or less than the longest wavelength corresponding to the image type indicated by the modality information.

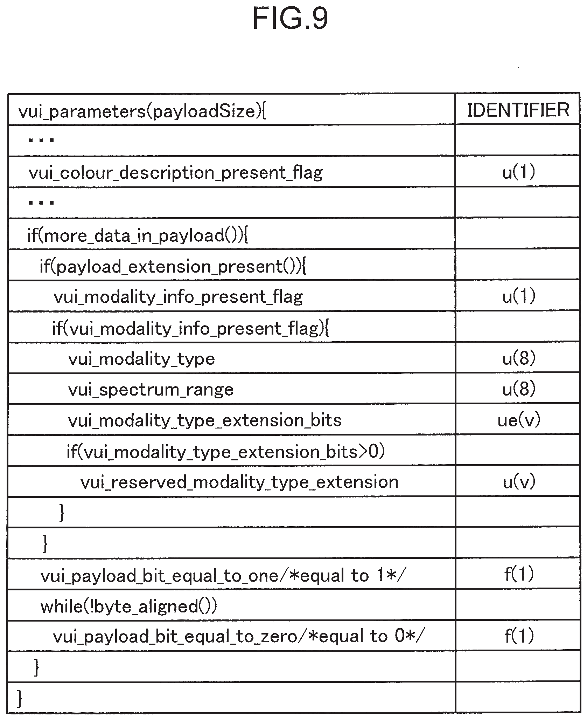

Fig. 9 is a simplified diagram showing a second example of the syntax of the VUI parameter including the second parameter P2.

In the example shown in Fig. 9, the second parameter P2 includes information indicating the index value of the wavelength information (vui_spectrum_range).

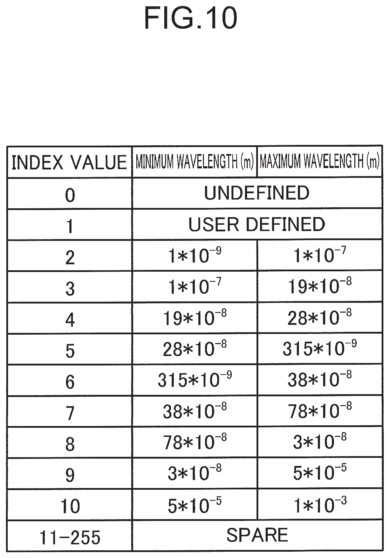

Fig. 10 is a diagram showing one example of the correspondence between the index value and the wavelength information. The minimum value (minimum wavelength) and the maximum value (maximum wavelength) of the wavelength band are defined in advance for each of the plurality of index values, and are shared by the encoder 1 and the decoder 2. In the example shown in Fig. 10, the index values 2 to 6 correspond to the ultraviolet wavelength region, the index value 7 corresponds to the visible light wavelength region, and the index values 8 to 10 correspond to the infrared wavelength region.

When the index value is, for example, 2, the minimum wavelength is defined as 1*10⁻⁹ (m) and the maximum wavelength is defined as 1*10⁻⁷ (m). When the index value is, for example, 3, the minimum wavelength is defined as 1*10⁻⁷ (m) and the maximum wavelength is defined as 19*10⁻⁸ (m).

When the index value is a certain specific value (0 in the example shown in Fig. 10), this means that the minimum wavelength and the maximum wavelength are not defined.

When the index value is another specific value (1 in the example shown in Fig. 10), this means that the minimum wavelength and the maximum wavelength are defined by user setting or the like.

Note that the index values of the other values (11-255 in this example) represent spare regions reserved for future extension use.

Note that in the encoder 1, the index value is set according to the wavelength band corresponding to the image type indicated by the modality information. For example, when vui_modality_type is 1 (visible light image), vui_spectrum_range is set to any one of 0, 1, or 7. When vui_modality_type is 2 (infrared image), vui_spectrum_range is set to any one of 0, 1, or 8 to 10. When vui_modality_type is 3 (ultraviolet image), vui_spectrum_range is set to any one of 0, 1, or 2 to 6. That is, by the encoder 1 setting an appropriate index value according to the image type, the decoder 2 can identify the appropriate wavelength band to decode the image based on the index value.

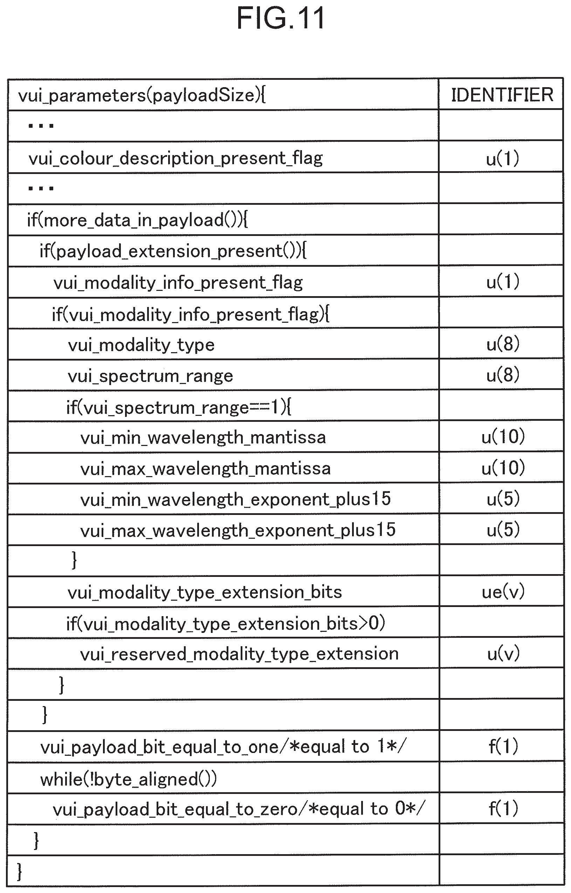

Fig. 11 is a simplified diagram showing a third example of the syntax of the VUI parameter including the second parameter P2.

In the example shown in Fig. 9, when the index value of vui_spectrum_range is set to 1 (user-defined), as in the example shown in Fig. 8, the minimum value of the wavelength band may be defined by vui_min_wavelength_mantissa and vui_min_wavelength_exponent_plus15, and the maximum value of the wavelength band may be defined by vui_max_wavelength_mantissa and vui_max_wavelength_exponent_plus15.

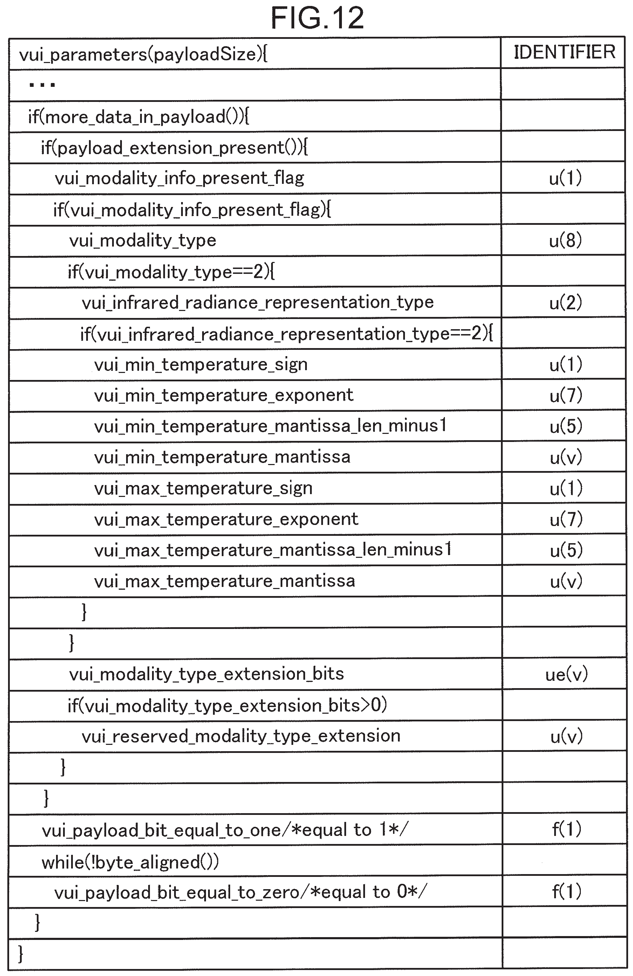

Fig. 12 is a simplified diagram showing a first modification of the syntax of the VUI parameter.

When the image type indicated by the modality information is the infrared image, the encoder 1 may further encode the representation type information (vui_infrared_radiance_representation_type) indicating the representation type of the infrared radiation intensity into the bitstream BS.

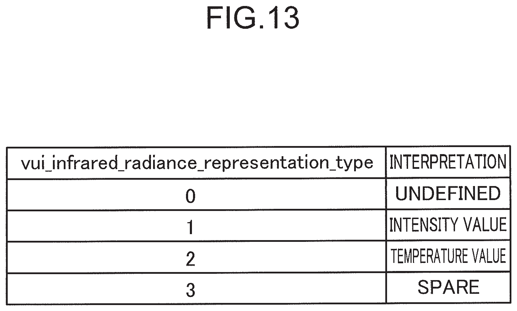

Fig. 13 is a diagram showing one example of the correspondence between values of the representation type information and the interpretation of each value.

When vui_infrared_radiance_representation_type is 0 or is not present, this means that the representation type of the infrared radiation intensity is unknown or unspecified and the representation type is not defined, or this means that the representation type is defined by a method other than the intensity value representation or the temperature value representation.

When the value of vui_infrared_radiance_representation_type is 1, this means that the representation type of the infrared radiation intensity is intensity value representation. In the intensity value representation, each pixel value of the image Q represents an intensity value of the infrared radiation intensity.

When the value of vui_infrared_radiance_representation_type is 2, this means that the representation type of the infrared radiation intensity is temperature value representation. In the temperature value representation, each pixel value of the image Q represents the temperature value converted from the infrared radiation intensity value.

vui_infrared_radiance_representation_type of any other value (3 in this example) indicates a spare region reserved for future extension use.

As shown in Fig. 12, when the value of vui_infrared_radiance_representation_type is 2 (that is, temperature value representation), the encoder 1 describes the temperature information within the VUI parameter. The temperature information includes the minimum temperature value and maximum temperature value that are floating point values.

The information indicating the minimum temperature includes information indicating the positive or negative sign of the minimum temperature (vui_min_temperature_sign), information indicating the minimum temperature exponent (vui_min_temperature_exponent), information indicating a value obtained by subtracting 1 from the bit length of the mantissa of the minimum temperature (vui_min_temperature_mantissa_len_minus1), and information (vui_min_temperature_mantissa) indicating the mantissa of the minimum temperature, in exponential representation using a determined base (for example, 2). Note that vui_min_temperature_mantissa_len_minus1 may be omitted by setting the bit length of the mantissa of the minimum temperature to a fixed value.

When the value of vui_min_temperature_sign is 0, this indicates that the sign of the minimum temperature is positive, and when the value of vui_min_temperature_sign is 1, this indicates that the sign of the minimum temperature is negative.

The information indicating the maximum temperature includes information indicating the positive or negative sign of the maximum temperature (vui_max_temperature_sign), information indicating the maximum temperature exponent (vui_max_temperature_exponent), information indicating a value obtained by subtracting 1 from the bit length of the mantissa of the maximum temperature (vui_max_temperature_mantissa_len_minus1), and information (vui_max_temperature_mantissa) indicating the mantissa of the maximum temperature, in exponential representation using a determined base (for example, 2). Note that vui_max_temperature_mantissa_len_minus1 may be omitted by setting the bit length of the mantissa of the maximum temperature to a fixed value.

When the value of vui_max_temperature_sign is 0, this indicates that the sign of the maximum temperature is positive, and when the value of vui_max_temperature_sign is 1, this indicates that the sign of the maximum temperature is negative.

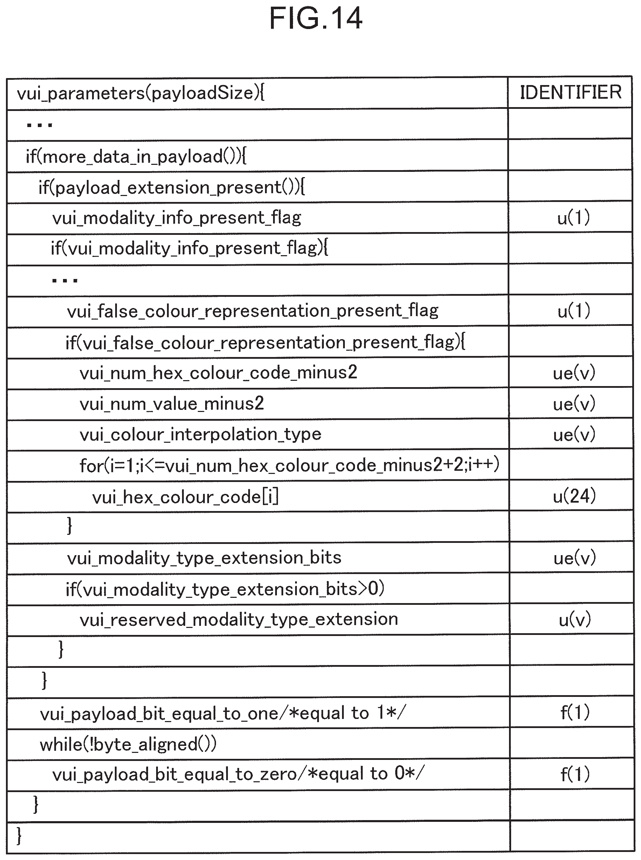

Fig. 14 is a simplified diagram showing a second modification of the syntax of the VUI parameter.

The encoder 1 may further encode, to the bitstream BS, flag information indicating whether the pixel values of the image Q are represented using the pseudo-color representation (vui_false_colour_representation_present_flag).

When the value of vui_false_colour_representation_present_flag is 1, this indicates that the pixel values of the image Q are represented using the pseudo-color representation, and when the value of vui_false_colour_representation_present_flag is 0, this indicates that the pixel values of the image Q are not represented using the pseudo-color representation.

When the pixel values of the image Q are represented using the pseudo-color representation, generation information for generating table information that associates each pixel value of the image Q with the color code of pseudo-color representation is described within the VUI parameter.

The generation information includes information indicating the number of color codes encoded in the bitstream BS minus 2 (vui_num_hex_colour_code_minus2), information indicating a value obtained by subtracting 2 from the number of plurality of sets of pixel values and the color code (vui_num_value_minus2), interpolation information for interpolating values between the plurality of sets (vui_colour_interpolation_type), and information indicating the i-th hexadecimal color code (vui_hex_colour_code[i]). Each hexadecimal color code is 24 bits long, with the first eight bits representing depth of red, the middle eight bits representing depth of green, and the last eight bits representing depth of blue. For example, when vui_hex_colour_code is 000000, this indicates black (RGB:0,0,0), and when vui_hex_colour_code is FFFFFF, this indicates white (RGB: 255, 255, 255).

When the value of vui_num_hex_colour_code_minus2 is, for example, 0, this means that the number of color codes encoded within the bitstream BS is two.

When the value of vui_num_value _minus2 is, for example, 4, this means that the number of sets of pixel values and the color code is 6. When the number of color codes encoded in the bitstream is two and the number of sets is six, this means that by dividing the range of color components into five equal divisions based on the values of the two color codes and interpolating the values of the four sets of intermediate color codes, table information including a total of six combinations of pixel values and color codes is generated.

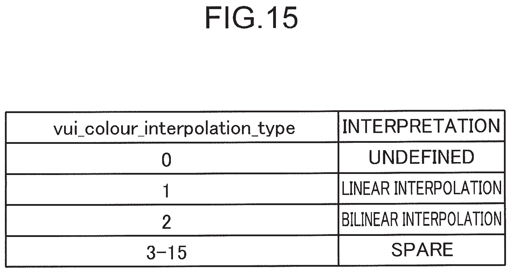

Fig. 15 is a diagram showing one example of the correspondence between values of the interpolation information and the interpretation of each value.

When vui_colour_interpolation_type is 0 or is not present, this means that the interpolation type is unknown or unspecified and is not defined, or is defined by a method other than linear interpolation or bilinear interpolation.

When vui_colour_interpolation_type is 1, this means that the interpolation type is linear interpolation.

When vui_colour_interpolation_type is 2, this means that the interpolation type is bilinear interpolation.

Other values of vui_colour_interpolation_type (3-15 in this example) indicate a spare region reserved for future extension use.

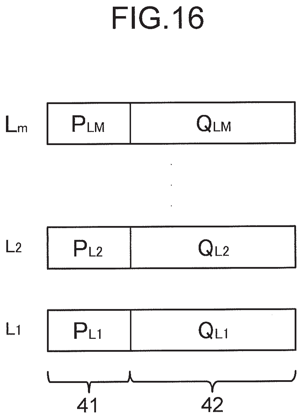

Fig. 16 is a diagram showing a configuration example of the bitstream BS.

The bitstream BS may have a multilayer configuration including image layers L₁ to Lₘ having plural m layers (m is a natural number of two or more). Fig. 16 shows only a single access unit. The access unit is a minimum processing unit of a temporal attribute, and corresponds to, for example, one frame of a moving image. The bitstream BS includes a plurality of temporarily continuous access units.

The payload region 42 in the image layer L₁ as a first or lowermost layer stores encoded data of an image Q_{L1} as a main image. The payload region 42 in the image layer L₂ as a second layer stores encoded data of an image Q_{L2} as an auxiliary image. Similarly, the payload region 42 in an image layer Lₘ as an m-th layer stores encoded data of an image Q_{Lm} as an auxiliary image.

The images Q_{L1} to Q_{Lm} may have image types or wavelength band different from one another. For example, in a multilayer configuration including three layers with m = 3, the image Q_{L1} may be a visible light image, the image Q_{L2} may be an infrared image, and an image Q_{L3} may be an ultraviolet image. When encoding an output signal from a multispectral camera, for example, the encoder 1 may divide the spectral range into m regions and encode images Q_{L1} to Q_{Lm}, of each spectral range as the bitstream BS in a multi-layer configuration.

In a case where the images Q_{L1} to Q_{Lm} have correlation therebetween, image reference may be made among the image layers L₁ to Lₘ. On the other hand, in a case where the images Q_{L1} to Q_{Lm} have no correlation therebetween, image reference may not be made among the image layers L₁ to Lₘ.

The header region 41 in the image layer L₁ stores encoded data of the parameter P_{L1} associated with the image Q_{L1}. The parameter P_{L1} contains the modality information and the wavelength information on the image Q_{L1}.

The header region 41 in the image layer L₂ stores encoded data of the parameter P_{L2} associated with the image Q_{L2}. The parameter P_{L2} contains the modality information and the wavelength information on the image Q_{L2}.

The header region 41 in the image layer Lₘ stores encoded data of the parameter P_{Lm} associated with the image Q_{Lm}. The parameter P_{Lm} contains the modality information and the wavelength information on the image Q_{Lm}.

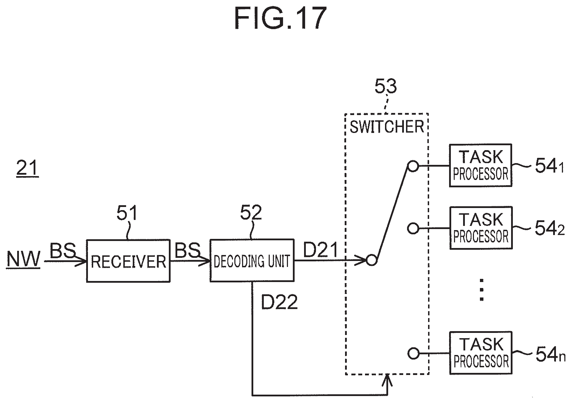

Fig. 17 is a simplified diagram showing a configuration of the circuitry 21 included in the decoder 2. The circuitry 21 includes a receiver 51, a decoding unit 52, a switcher 53, and plural n (n is a natural number of two or more) of task processors 54₁ to 54ₙ. Task processing executed by the task processors 54₁ to 54ₙ includes the human vision and the machine task. The machine task includes various types of task processing with use of an AI model, such as object detection, object tracking, object segmentation, action recognition, or pose estimation.

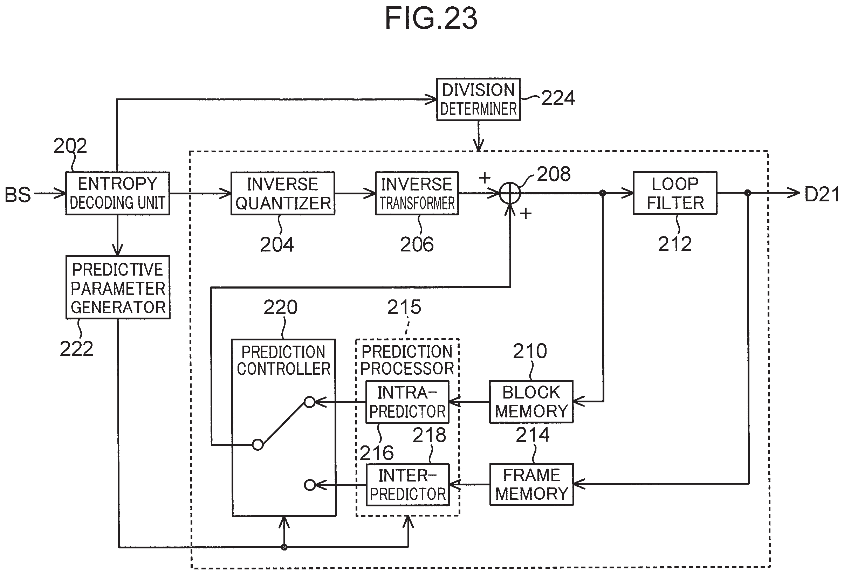

Description is made next to the decoding unit 52 according to the present embodiment. Fig. 23 is a block diagram showing one example of a functional configuration of the decoding unit 52 according to the present embodiment. The decoding unit 52 decodes a stream as an encoded image in block units.

As shown in Fig. 23, the decoding unit 52 includes an entropy decoding unit 202, an inverse quantizer 204, an inverse transformer 206, an adder 208, a block memory 210, a loop filter 212, a frame memory 214, an intra-predictor 216, an inter-predictor 218, a prediction controller 220, a predictive parameter generator 222, and a division determiner 224. The intra-predictor 216 and the inter-predictor 218 constitute part of a prediction processor 215.

For example, the decoding unit 52 shown in Fig. 23 includes a plurality of constituent elements implemented by the circuitry 21 and the memory 22 shown in Fig. 1.

The circuitry 21 includes a processor such as a CPU. The circuitry 21 may be constituted by an electronic circuit dedicated or generalized to stream decoding, or by an assembly of a plurality of electronic circuits. For example, the circuitry 21 may function as a plurality of constituent elements except for a constituent element for information storage, out of the plurality of constituent elements included in the decoding unit 52 shown in Fig. 23.

The memory 22 may be constituted by an electronic circuit dedicated or generalized to information storage, or by an assembly of a plurality of electronic circuits. The memory 22 may be externally connected to the circuitry 21 or may be incorporated in the circuitry 21. The memory 22 may be a magnetic disk, an optical disk, or the like, or may be expressed as a storage, a recording medium, or the like. The memory 22 may be a nonvolatile memory or a volatile memory.

The memory 22 may store a stream to be decoded or a decoded image. The memory 22 may store a program for stream decoding by the processor.

The memory 22 may function as the constituent element for information storage, out of the plurality of constituent elements included in the decoding unit 52 shown in Fig. 23. Specifically, the memory 22 may function as the block memory 210 and the frame memory 214 shown in Fig. 23. More specifically, the memory 22 may store a restructured image (specifically, a restructured block, a restructured picture, or the like).

Note that in the decoding unit 52, part of the plurality of constituent elements shown in Fig. 23 may not be mounted, and part of a plurality of processing executed by the plurality of constituent elements may not be executed. Alternatively, part of the plurality of constituent elements shown in Fig. 23 may be mounted on a different device, and part of the plurality of processing executed by the plurality of constituent elements may be executed by the different device.

Each of the inverse quantizer 204, the inverse transformer 206, the adder 208, the block memory 210, the frame memory 214, the intra-predictor 216, the inter-predictor 218, the prediction controller 220, and the loop filter 212 included in the decoding unit 52 shown in Fig. 23 executes processing similarly to each of the inverse quantizer 112, the inverse transformer 114, the adder 116, the block memory 118, the frame memory 122, the intra-predictor 124, the inter-predictor 126, the prediction controller 128, and the loop filter 120 included in the encoding unit 33 shown in Fig. 21.

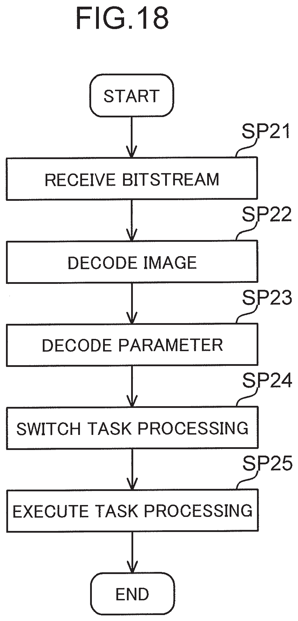

Fig. 18 is a flowchart showing processing executed by the circuitry 21 included in the decoder 2.

Initially in step SP21, the receiver 51 receives the bitstream BS transmitted from the encoder 1 via the transmission line NW.

Next, in step SP22, the decoding unit 52 acquires the image Q through decoding from the payload region 42 in the bitstream BS received from the receiver 51. Decoding may include extraction. The decoding unit 52 outputs image data D21 of the image Q. The image data D21 corresponds to the image data D11 indicated in Fig. 2.

As shown in Fig. 16, when the bitstream BS has a multi-layer configuration including a plurality of image layers L₁ to Lₘ, the decoding unit 52 may acquire the plurality of images Q_{L1} to Q_{Lm} different in terms of image type or wavelength band from the plurality of image layers L₁ to Lₘ.

Next, in step SP23, the decoding unit 52 acquires the parameter P through decoding from the header region 41 (or the determined region 43 in the header region 41) in the bitstream BS received from the receiver 51. As described above, the parameter P includes the first parameter P1, the second parameter P2, the third parameter P3, and the fourth parameter P4. The first parameter P1 includes modality information indicating the image type of the image Q. The second parameter P2 includes wavelength information indicating the wavelength band of light emission of the image Q. The third parameter P3 includes color information of the image Q. The fourth parameter P4 includes extension bit information corresponding to the spare image type when the modality information indicates that the image type is a spare image type for extension. Processing in step SP22 and processing in step SP23 may be executed in inverse order of exemplification in Fig. 18, or may be executed simultaneously.

When the VUI parameter shown in Fig. 12 is included in the parameter P, and when the modality information indicates that the image type is an infrared image (that is, when the value of vui_modality_type is 2), the decoding unit 52 further acquires the representation type information indicating the representation type of the infrared radiation intensity from the bitstream BS. When the representation type information indicates that the pixel value represents a temperature value (that is, when it is a temperature value representation), the decoding unit 52 further acquires temperature information including the minimum and maximum temperatures of the temperature value from the bitstream BS.

When the VUI parameter shown in Fig. 14 is included in the parameter P and the flag information indicates that the pixel values are represented using pseudo-color representation (that is, when the value of vui_false_colour_representation_present_flag is 1), the decoding unit 52 further acquires, from the bitstream BS, the above-mentioned generation information for generating table information that associates each pixel value of the image Q with a color code of pseudo-color representation. The decoding unit 52 generates the table information based on the acquired generation information.

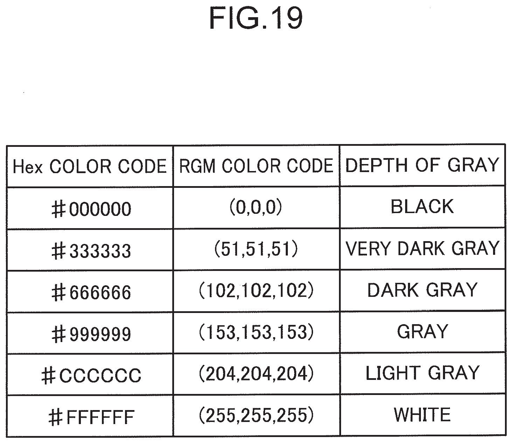

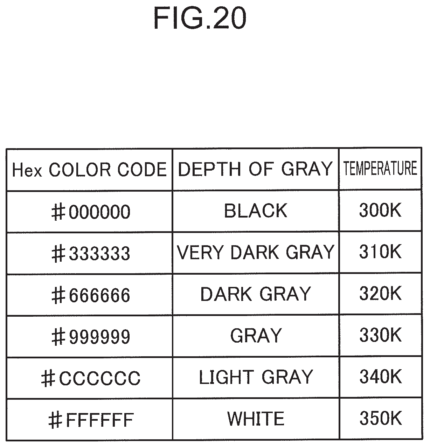

Figs. 19 and 20 are simplified diagrams showing one example of the table information.

In the example shown in Figs. 19 and 20, the number of sets of pixel values and color codes is six (that is, the value of vui_num_value_minus2 is 4), and the image type is an infrared image. The interpolation type can be linear interpolation or bilinear interpolation.

In the example shown in Fig. 19, the table information indicates the correspondence between hexadecimal color codes (Hex color codes), RGB color codes, and depth of gray.

In the example shown in Fig. 20, the table information indicates the correspondence between the Hex color codes, depth of gray, and temperature, where the depth of gray is mapped to the temperature. For example, black represents a temperature of 300K, gray represents a temperature of 330K, and white represents a temperature of 350K.

Next, in step SP24, the switcher 53 switches the task processors 54₁ to 54ₙ based on the modality information received from the decoding unit 52. The switcher 53 retains the table information (not shown) containing preliminarily set correspondence between the plurality of image types and the plurality of task processors 54₁ to 54ₙ. The switcher 53 refers to the table information to select one of the plurality of task processors 54₁ to 54ₙ corresponding to the image type indicated by the modality information.

With reference to Fig. 18, next, in step SP25, the one of the task processors 54₁ to 54ₙ thus selected in step SP24 executes task processing based on the image data D21 received from the decoding unit 52 via the switcher 53.

The encoder 1 and the decoder 2 according to the present embodiment can transmit, from the encoder 1 to the decoder 2, the modality information indicating the image type of the image Q and the wavelength information indicating the wavelength band of light emission of the image Q contained in the bitstream BS, thereby making it possible to improve execution accuracy of task processing by the decoder 2.

With the encoder 1 and the decoder 2 according to the present embodiment, the modality information indicates that the image type is at least one of the visible light image, the infrared image, the ultraviolet image, not defined, and the spare image type for extension. Therefore, the modality information is included indicating that the image type is not defined or that the image type is a spare image type for extension. Therefore, these devices can handle situations such as even if the image characteristics are unknown and the image type cannot be identified in the encoder 1, or for future extension of image types.

### Industrial Applicability

The present disclosure is particularly useful for application to an image processing system including an encoder that encodes an image to a bitstream and transmits the bitstream, and a decoder that decodes the image from the received bitstream.

## Claims

1. A decoder comprising:
circuitry; and
a memory connected to the circuitry,
wherein the circuitry acquires, from a bitstream, an image, and a first parameter and a second parameter associated with the image,
the first parameter includes modality information indicating an image type of the image, and
the second parameter includes wavelength information indicating a wavelength band of light emission of the image.

2. The decoder according to claim 1, wherein
the second parameter includes flag information indicating whether the wavelength information is described in the bitstream, and
when the flag information indicates that the wavelength information is described in the bitstream, the circuitry acquires information indicating a minimum value and a maximum value of the wavelength band from the bitstream.

3. The decoder according to claim 2, wherein
when the flag information indicates that the wavelength information is not described in the bitstream, the minimum value and the maximum value are not defined.

4. The decoder according to claim 1, wherein
the second parameter includes an index value, and
a minimum value and a maximum value of the wavelength band corresponding to the index value are defined.

5. The decoder according to claim 4, wherein
when the index value is a specific value, the minimum value and the maximum value are not defined.

6. The decoder according to claim 4, wherein
when the index value is a specific value, the minimum value and the maximum value are described in the bitstream, and the circuitry acquires information indicating the minimum value and the maximum value from the bitstream.

7. The decoder according to claim 2 or 6, wherein
the information indicating the minimum value includes information indicating mantissa of the minimum value and information indicating an exponent in exponential representation using a determined base, and
the information indicating the maximum value includes information indicating mantissa of the maximum value and information indicating an exponent in exponential representation using a determined base.

8. The decoder according to claim 7, wherein
the information indicating the mantissa of the minimum value has three or more significant decimal digits, and
the information indicating the mantissa of the maximum value has three or more significant decimal digits.

9. The decoder according to claim 7, wherein
when the information indicating the mantissa of the minimum value indicates "0", the minimum value is not defined, and
when the information indicating the mantissa of the maximum value indicates "0", the maximum value is not defined.

10. The decoder according to claim 2 or 4, wherein
the minimum value is set to be equal to or greater than a shortest wavelength corresponding to the image type indicated by the modality information, and
the maximum value is set to be equal to or less than a longest wavelength corresponding to the image type indicated by the modality information.

11. The decoder according to claim 1, wherein
the circuitry acquires the first parameter and the second parameter from a determined header region of the bitstream in the acquisition of the first parameter and the second parameter, and
the determined header region includes VUI or SEI.

12. The decoder according to claim 1, wherein
the bitstream has a multi-layer configuration including a plurality of image layers, and
the circuitry acquires a plurality of the images different in terms of the wavelength band from the plurality of image layers in the image acquisition.

13. The decoder according to claim 12, wherein
the bitstream with the multi-layer configuration is a bitstream in which an output signal from a multispectral camera is encoded.

14. An encoder comprising:
circuitry; and
a memory connected to the circuitry,
wherein the circuitry encodes, into a bitstream, an image, and a first parameter and a second parameter associated with the image,
the first parameter includes modality information indicating an image type of the image, and
the second parameter includes wavelength information indicating a wavelength band of light emission of the image.

15. The encoder according to claim 14, wherein
the second parameter includes flag information indicating whether the wavelength information is described in the bitstream, and
the circuitry encodes information indicating a minimum value and a maximum value of the wavelength band into the bitstream, and in such a case, sets the flag information indicating that the wavelength information is described in the bitstream.

16. The encoder according to claim 15, wherein
the circuitry does not define the minimum value and the maximum value, and in such a case, sets the flag information indicating that the wavelength information is not described in the bitstream.

17. The encoder according to claim 14, wherein
the second parameter includes an index value, and
a minimum value and a maximum value of the wavelength band corresponding to the index value are defined.

18. The encoder according to claim 17, wherein
the circuitry does not define the minimum value and the maximum value, and in such a case, sets the index value to a specific value.

19. The encoder according to claim 17, wherein
the circuitry encodes information indicating the minimum value and the maximum value into the bitstream, and in such a case, sets the index value to a specific value.

20. The encoder according to claim 15 or 19, wherein
the information indicating the minimum value includes information indicating mantissa of the minimum value and information indicating an exponent in exponential representation using a determined base, and
the information indicating the maximum value includes information indicating mantissa of the maximum value and information indicating an exponent in exponential representation using a determined base.

21. The encoder according to claim 20, wherein
the information indicating the mantissa of the minimum value has three or more significant decimal digits, and
the information indicating the mantissa of the maximum value has three or more significant decimal digits.

22. The encoder according to claim 20, wherein
the circuitry does not define the minimum value, and in such a case, sets the information indicating the mantissa of the minimum value to "0", and
the circuitry does not define the maximum value, and in such a case, sets the information indicating the mantissa of the maximum value to "0".

23. The encoder according to claim 15 or 17, wherein
the circuitry sets the minimum value to be equal to or greater than a shortest wavelength corresponding to the image type indicated by the modality information, and
sets the maximum value to be equal to or less than a longest wavelength corresponding to the image type indicated by the modality information.

24. The encoder according to claim 14, wherein
the circuitry encodes the first parameter and the second parameter into a determined header region of the bitstream in the encoding of the first parameter and the second parameter, and
the determined header region includes VUI or SEI.

25. The encoder according to claim 14, wherein
the bitstream has a multi-layer configuration including a plurality of image layers, and
the circuitry encodes a plurality of the images different in terms of the wavelength band into the plurality of image layers in the image encoding.

26. The encoder according to claim 25, wherein
the circuitry generates the bitstream with the multi-layer configuration by encoding an output signal from a multispectral camera.

27. A decoding method comprising, by a decoder:
acquiring, from a bitstream, an image, and a first parameter and a second parameter associated with the image,
wherein the first parameter includes modality information indicating an image type of the image, and
the second parameter includes wavelength information indicating a wavelength band of light emission of the image.

28. An encoding method comprising, by an encoder:
encoding, into a bitstream, an image, and a first parameter and a second parameter associated with the image,
wherein the first parameter includes modality information indicating an image type of the image, and
the second parameter includes wavelength information indicating a wavelength band of light emission of the image.
